# EUROPÄISCHE PATENTSCHRIFT

(11) **EP 1 154 652 B1**
(45) Veröffentlichungstag und Bekanntmachung des Hinweises auf die Patenterteilung: **14.05.2008**
(21) Anmeldenummer: 01000141.0
(22) Anmeldetag: 10.05.2001
(51) Int. Cl.: H04N 9/31, G09G 3/34

(54) **Projektionssystem und Verfahren zum Betreiben eines Projektionssystems**
Projection system and method for operating a projection system
Système de projection et méthode pour faire fonctionner un sytème de projection

(30) Priorität: 12.05.2000 DE 10023342
(43) Veröffentlichungstag der Anmeldung: 14.11.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Moench, Dr. Holger c/o Philips Corp. Intel. Prop. GMBH, 52064, Aachen (DE); Riederer, Dr. Xaver c/o Philips Corp. Int. Prop. GMBH, 52064, Aachen (DE)
(74) Vertreter: Volmer, Georg

(56) Entgegenhaltungen:
- EP-A- 0 547 603
- WO-A-01/49041
- WO-A-95/11572
- US-A- 5 608 294
- US-A- 5 706 061

## Beschreibung

Die Erfindung betrifft ein Projektionssystem sowie ein Verfahren zum Betreiben eines Proj ektionssystems.

Hierbei wird eine sequentielle Abfolge von Farben unter Zuhilfenahme der Lampe erzeugt sowie die Stromstärke eines der Lampe zugeführten elektrischen Betriebsstromes über die Zeit variiert. Eine derartige Variation kann insbesondere einer Stabilisierung eines Lampenbogens dienen. Entsprechend sind bei einem derartigen Projektionssystem Mittel zur, vorzugsweise lichtbogenstabilisierenden, Steuerung der Stromstärke des der Lampe zugeführten elektrischen Betriebsstromes über die Zeit sowie Mittel zum Erzeugen einer sequentiellen Abfolge von Farben unter Zuhilfenahme der Lampe vorgesehen. Als Lampe kann insbesondere eine Hochleistungs-Entladungslampe zur Anwendung kommen.

Letztere Projektionssysteme sind, beispielsweise als DLP-(Digital-Light-Processing)-Projektionssysteme, seit geraumer Zeit in unterschiedlichster Form bekannt, beispielsweise aus der WO 95/11572. Sie umfassen in der Regel wenigstens eine Hochleistungs-Entladungslampe (High-Intensity-Discharge-(HID)-Lamp), mittels welcher ein Array, nämlich ein sogenanntes Deformable Mirror Device oder Digital Mirror Device, kurz DMD, beleuchtet wird. Die einzelnen Spiegel des Arrays bilden ein Raster, mittels welchem Bildmuster erzeugt und z.B. Videobilder wiedergegeben werden können. Dazu werden die einzelnen Spiegel so verkippt, dass sie beim Betrachten hell oder dunkel erscheinen, wobei das Betrachten in der Regel nicht direkt erfolgt. Vielmehr befinden sich in dem Strahlengang zwischen Array und dem Auge eines Betrachters in der Regel noch wenigstens eine Linse, ein Umlenkspiegel und ein Bildschirm bzw. eine Leinwand.

Zur Erzeugung von farbigen Bildern ist bei den Projektionssystemen eine schnell rotierende Farbscheibe vorgesehen, die in der Regel wenigstens drei Segmente mit den für eine additive Farbmischung benötigten Grundfarben, also z.B. Rot, Grün und Blau, aufweist. Die farbigen Segmente der Farbscheibe bestehen meist aus dichroitischen Filtern (weshalb die Farbscheiben gelegentlich auch als "Filterräder" bezeichnet werden), die nur Licht einer bestimmten Farbe durchlassen, so dass das durch sie hindurchtretende Licht z.B. rot oder grün erscheint. Kurz nacheinander auftreffende farbige Lichtstrahlen werden im Auge zu einem neuen Farbeindruck zusammengesetzt. Mittels der schnell rotierenden Farbscheibe und entsprechender Steuerung der einzelnen Spiegel ist es daher möglich, Bilder beliebiger Farbe zu erzeugen.

Alternativ zu einem Farbrad ist beispielsweise auch ein elektrooptisch schaltbares Filter möglich, welches durch Anlegen einer Steuerspannung in seiner Gesamtheit zwischen verschiedenen Farben und Weiß geschaltet werden kann. Ein derartiges Element ist beispielsweise in "Progress in Field Sequential Colour Shuttered Technology" von G. Scharp et al. in Proc. SPIE Vol. 3013, Seiten 107 bis 111 von 1997 beschrieben.

Darüber hinaus gibt es Projektorsysteme, bei denen Weiß als zusätzliche "Farbe" zur Verfügung steht, um durch gezielte Einstellung des Weißanteils die Helligkeit des Bildes besser justieren zu können. Verschiedene Möglichkeiten hierzu werden in der EP 0 547 603 A2 beschrieben.

Die rotierende Farbscheibe bzw. die Mittel zur Erzeugung einer sequentiellen Farbabfolge können bei solchen Projektionssystemen im Strahlengang von der Lampe zum Auge prinzipiell sowohl nach als auch vor dem DMD angeordnet werden. In der Regel werden diese jedoch zwischen Lampe und DMD vorgesehen.

Die bekannten Projektionssysteme benötigen in der Regel Hochleistungs-Entladungslampen mit konstanter Lichtleistung (konstantem "Lichtstrom"), d.h. dass stets die gleiche Lichtmenge von der Lampe abgegeben werden muss. Ein Beispiel für ein solches System findet sich in der US 5.680,180. Solche HID-Lampen sind aber problematisch hinsichtlich der Stabilität des Entladungsbogens und der Haltbarkeit der Elektroden. Aus der US 5,608,294 ist ein Verfahren zum Betreiben einer HID-Lampe mit kurzem Lichtbogen bekannt, welches die Konstanz des Lichtbogens und die Haltbarkeit der Elektroden wesentlich verbessert. Dabei wird der Betriebsstrom derart variiert, dass es zu einer Stabilisierung des Lampenbogens kommt. Das Verfahren ist aber bei den bekannten Projektionssystemen nicht anwendbar, da diese Systeme in der Regel einen konstanten Lichtstrom benötigen.

Aus der WO 95/11572 ist es bekannt, die Stromstärke des Betriebsstroms der Lampe zu variieren, um systembedingte Farbunstimmigkeiten auszugleichen und die Farbbalance einzustellen. Gemäß der Lehre der WO 95/11572 ist es zwingend notwendig, die Stromstärke des Betriebsstroms der HID-Lampe den Anforderungen des Projektionssystems anzupassen. Dies führt zu schlechteren Lampeneigenschaften, insbesondere zu Problemen mit der Stabilität von Lichtbogen und Elektroden.

Davon ausgehend liegt der Erfindung die Aufgabe zugrunde, ein Projektionssystem und ein Verfahren zum Betreiben eines Projektionssystems anzugeben, welche es erlauben, die verwendete HID-Lampe leistungs- und standzeitoptimiert zu betreiben, ohne dass es durch den nicht-konstanten Lichtstrom zu ungewünschten Artefakten und insbesondere Problemen bei der Farbwiedergabe käme.

Die Aufgabe wird gelöst von einem Verfahren und einem Projektionssystem mit den Merkmalen der jeweiligen unabhängigen Ansprüche. Vorteilhafte Durchführungsformen bzw. Weiterbildungen sind Gegenstand der abhängigen Unteransprüche.

Es sei an dieser Stelle betont, dass das erfindungsgemäß vorgeschlagene Variieren der Stromstärke zwar zu einem gewissermaßen "gepulsten" Betrieb der Lampe führt, dass damit aber nicht die allgemein als "gepulster Betrieb" bezeichnete Lampenbetriebsart gemeint ist, bei der eine Lampe in schnell wiederholten, sehr kurzen Zeitabschnitten betrieben wird, aber einen großen Teil der Zeit kein Licht abgibt. Auch solche Lampen werden gelegentlich bei Projektionssystemen verwendet (siehe z.B. EP 0 865 210 A2, WO 97/24871 oder US 5,428,408). Die hier vorgeschlagene "Pulsbetriebsart" meint vielmehr eine spezielle Form des Stromstärkenverlaufs über die Zeit, die zu einer Stabilisierung des Lampenbogens führt. Dabei gibt die Lampe zwar zu jeder oder zumindest fast jeder Zeit Licht ab, die Lichtmenge ist aber nicht zeitlich konstant, sondern folgt der zur Stabilisierung notwendigen Stromform.

Es versteht sich hierbei, dass die erfindungsgemäße Mittel zum Erzeugen einer sequentiellen Abfolge von Farben jeder geeigneten Natur gemäß ausgebildet sein können. Wesentlich ist, dass eine derartige Einrichtung in der Lage ist, eine sequentielle Abfolge verschiedener Farben, unter Einbezug von Weiß, zu erzeugen. Darüber hinaus ist die Erfindung nicht auf ein DMD beschränkt, sondern kann beispielsweise Displays bzw. Projektionssysteme umfassen, bei denen die Spiegel durch ferroelektrische LCD ersetzt sind. Die Erfindung eignet sich insbesondere für Projektionssysteme, bei welchen durch zeitlich moduliertes Schalten eines binären Display-Elementes im Rahmen einer Puls-Weiten-Modulation Farben sowie gegebenenfalls Graustufen erzeugt werden.

In der bereits zitierten US 5,680,180 wird zur Einstellung der Farbbalance ein vergleichsweise aufwendiges System mit verstellbaren Farbscheiben vorgeschlagen.

Eine wesentlich einfachere Steuerung der Farbbalance wird dadurch möglich, dass das Maximum der Stromstärke dann erreicht wird, wenn eine bestimmte Farbe erzeugt wird bzw. wenn sie sich ein bestimmtes Segment einer Farbscheibe im Strahlengang der für die Projektion verwendeten Lichtstrahlen befindet. Beispielsweise kann es beim Wiedergeben von Videosequenzen mittels eines Projektionssystems mit einer Farbscheibe mit Segmenten in den drei Grundfarben rot, grün und blau sowie mit weißen, also weißes Licht durchlassenden Segmenten wünschenswert sein, den Rot-Anteil bei der Farbmischung stärker zu betonen. Dazu wird dann das System derart gesteuert, dass die Lampe immer dann besonders hell leuchtet, wenn sich das oder ein rotes Segment der Farbscheibe im Strahlengang befindet. Die Einstellung der Farbbalance kann also allein durch entsprechende Steuerung und Synchronisation von Lampenstrom und Farbscheibendrehung erfolgen, was gegenüber anderen bekannten Lösungen, z.B. Lösungen mit verschiedenen Farbscheiben für unterschiedliche Einsatzzwecke (Datenwiedergabe, z.B. Anzeigen von Tabellen, Videowiedergabe mit möglichst natürlichen Farben) aufgrund der Einfachheit der Lösung vorteilhaft ist.

Während eine exakte Steuerung sich verhältnismäßig aufwendig gestaltet, ist die Gesamtanordnung wesentlich einfacher zu beherrschen, wenn das Maximum bei der Erzeugung genau einer Farbe bzw. in genau einem Segment auftritt.

Bei dem erfindungsgemäßen Verfahren erfolgt die Steuerung des Lampenstroms derart, dass das Maximum der Stromstärke dann erreicht wird, wenn beim Erzeugen der Farbabfolge Weiß erzeugt wird. Dies hat z.B. den großen Vorteil, dass sich die - zur Stabilisierung des Lampenbogens notwendige - Schwankung in der Helligkeit der Lampe nicht in einer Veränderung der Farbe, sondern lediglich in der Sättigung der Farbe niederschlägt, was jedoch vom menschlichen Auge praktisch nicht wahrgenommen wird.

Ein zweiter Vorteil dieser Steuerungsweise ist, dass bei der Berechnung der Grauwerte (Helligkeitswerte) bei der Erzeugung eines digitalen Bildes weiterhin - wie bislang üblich - von einem über die Zeit konstanten Lichtstrom ausgegangen werden kann, so dass auf die bewährten Berechnungsalgorithmen zurückgegriffen werden kann.

Ein dritter Vorteil ist schließlich, dass aufgrund der Tatsache, dass die größte Helligkeit der Lampe in den Bereich der Projektion weißen Lichtes fällt, die Zeitdauer für die Erzeugung des Weißanteils der Farbfolge kleiner ausfallen kann, so dass mehr Zeit für die Erzeugung der farbigen Anteile eines Bildpunktes verwendet werden kann.

Vorzugsweise entspricht die Pulsdauer im wesentlichen dem Durchgang des entsprechenden weißen Segmentes. Hierdurch ist gewährleistet, dass lediglich dieses Segment durch den Puls beeinflusst wird, während die übrigen Segmente von dem nicht gepulsten Bereich beeinflusst sind. Hierbei hat sich herausgestellt, dass eine Variation von ± 5 %, insbesondere von ± 1 %, am Anfang bzw. am Ende der Weißerzeugung bezogen auf die Gesamtdauer der Weißerzeugung zu ausreichend guten Ergebnissen führt.

Hinsichtlich der Lampenstabilität sowie einer einfachen Verfahrensführung ist es vorteilhaft, wenn der von der Lampe abgegebene Lichtstrom nur kurzzeitig bis gar nicht verschwindet.

Die Synchronisationsmittel dienen dazu, eine Farbstabilität während der Projektion zu gewährleisten. Es versteht sich, dass als derartige Synchronisationsmittel sämtliche Möglichkeiten ausgeschöpft werden können, die durch die Mittel zum Erzeugen der sequentiellen Farbabfolge sowie die Mittel zur Steuerung der Stärke des Lampenbetriebsstromes denkbar erscheinen. Beispielsweise können diese Mittel über eine gemeinsamen Taktgenerator getaktet sein. Andererseits kann auch eines dieser Mittel, beispielsweise die sich drehende Farbscheibe, einen entsprechenden Takt vorgeben, der dann entsprechend genutzt wird.

Durch eine entsprechende Phasenverschiebung, die durch die Synchronisationsmittel ermöglicht werden kann, kann auf baulich sehr einfache Weise eine Farbanpassung erfolgen. Dieses ist insbesondere für zeitlich veränderbare Farbbalancen von Vorteil, die über eine Neuberechnung bzw. Nachberechnung nachkalibriert werden können.

Vorzugsweise beträgt der Anteil der Zeitdauer, über welche beim Betrieb des Projektsystems das Weiß erzeugt wird, zwischen etwa 3 bis 15 %, vorzugsweise zwischen etwa 6 bis 12 %, der Gesamtdauer einer Farberzeugungssequenz. Auf diese Weise steht verhältnismäßig viel Zeit für die Erzeugung der eigentlichen Farben zur Verfügung Bei der Verwendung einer Farbscheibe können hierzu die weißen Segmente etwa 6 bis 12% der Gesamtfläche der Farbscheibe ausmachen und dementsprechend während etwa 6 bis 12% der Gesamtdauer der Umdrehung der Farbscheibe mit Licht von einer HID-Lampe durchstrahlt werden.

Beiliegende Figur illustriert eine typische Stromform, bei der eine volle Periode des Lampenstroms 2*t_{1/2} beträgt. Für eine Zeitdauer t_{P} wird ein erhöhter Lampenstrom I₃ zur Lampenstabilisierung gemäß der US 5,608,294 verwendet. Während die zur Lampenstabilisierung geeignete Stromstärke I₃ über die Lebensdauer der Lampe konstant bleibt, wird die Stromstärke I₂ während der Lebensdauer der Lampe nachgeregelt, beispielsweise auf I_{2'}, um bei eventuell veränderter Lampenspannung eine konstante Lampengesamtleistung zu gewährleisten.

Die von der Lampe während einer Periode des Stromes abgegebene Lichtmenge folgt der Stromform. Dadurch ist das Verhältnis der während des Pulses erhöhten Lichtmenge, der Lichtpuls, zur während der sonstigen Zeit abgegebenen Lichtmenge über die Lebensdauer der Lampe Veränderungen unterworfen. Entsprechend verändert sich der relative Farbanteil, welcher der Stellung des Filterrades zum Zeitpunkt des erhöhten Lampenstromes entspricht.

Um den Einfluss auf die Farbbalance des projizierten Bildes zu kontrollieren, ist es vorteilhaft, die Lampenbetriebsfrequenz, mit welcher die abgebildete Stromform wiederholt wird, auf die Frequenz, mit welcher die Farbabfolge erzeugt wird, und damit auf die Bildfrequenz zu synchronisieren. Hierzu können geeignete Synchronisationsmittel, wie ein Taktgeber, vorgesehen sein. So kann dafür gesorgt werden, dass die erhöhte Lichtmenge stets in einem Filtersegment gleicher Farbe, insbesondere Weiß, auftritt.

Ist die relative Erhöhung der Lichtmenge konstant, so kann sie zur Neuberechnung der Farbbalance im Sinne eines Korrekturfaktors verwendet werden.

In der Regel erhöht sich die relative Lichtmenge allerdings während der Alterung der Lampe willkürlich. Dieses kann zu Farbverschiebungen während der Lebensdauer des Geräts führen. Bei dem erfindungsgemäßen Verfahren wird daher beim Einsatz einer Farbscheibe mit einem oder mehreren weißen Segmenten neben farbigen Segmenten der Puls in einem Segment oder mehreren weißen Segmenten des Filterrades platziert. Eine Änderung des relativen Weißbetrages führt nicht zur Verschiebung des Farbeindruckes, beispielsweise von neutral zu grün, sondern lediglich zu einer Verschiebung der Farbsättigung ähnlich einem Ausbleichen. Dieses ist für einen Betrachter wesentlich weniger störend.

Während der Dauer eines Farbsegments werden auf dem DMD-Display durch kürzeres oder längeres Einschalten einzelner Spiegel Grauabstufungen erzeugt. Zur korrekten Berechnung der Linearität einer derartigen Grauskala sollte die Lichtmenge möglichst konstant bleiben. Daher ist eine Anordnung besonders vorteilhaft, bei welcher die Pulsdauer im Wesentlichen der Dauer des weißen Segments entspricht, so dass wegen der konstanten Höhe des Pulses auch diese Berechnungen stimmig bleiben.

Ein typisches Filterrad kann beispielsweise ein Weißsegment von 36° enthalten, was 10% seiner Umlaufzeit entspricht. Dies erfordert eine Pulsdauer von 10% der Stromperiode. Zur Vermeidung sichtbarer Artefakte wird in der Praxis die Häufigkeit der Farbwechsel dadurch erhöht, dass das Filterrad während eines Bildes (Framefrequenz) zwei- bis dreimal umläuft. Bei einer Videofrequenz von bspw. 50 Hz bedeutet dieses eine Umlauffrequenz des Filterrades, und damit eine Häufigkeit des weißen Segmentes bzw. des Pulses, von 100 bis 150 Hz. Da eine volle Periode des Lampenstromes zwei Pulse enthält, wird die Lampe mit einer Frequenz von 50 bis 75 Hz betrieben.

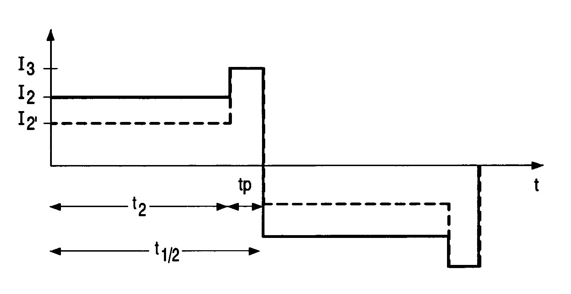

## Patentansprüche

1. Verfahren zum Betreiben eines Projektionssystems mit wenigstens einer Lampe, vorzugsweise einer Hochleistungs-Entladungslampe,
wobei eine sequentielle Abfolge von Farben unter Zuhilfenahme der Lampe erzeugt wird und wobei die Stromstärke des der Lampe zugeführten elektrischen Betriebsstromes über die Zeit so variiert wird, dass der Lampenstrom einen den Lichtbogen der Lampe stabilisierenden Puls aufweist,
**dadurch gekennzeichnet,**
**dass** die Farbabfolge Weiß aufweist
und die Stromstärke des Betriebsstroms der Lampe derart gesteuert und mit der sequentiellen Abfolge von Farben synchronisiert wird, dass der den Lichtbogen der Lampe stabilisierende Puls im Betriebsstrom dann auftritt, wenn Weiß und nur Weiß erzeugt wird.

2. Verfahren nach Anspruch 1,
**dadurch gekennzeichnet,**
**dass** eine Zeitdauer des Pulses im wesentlichen der Dauer der Erzeugung der Farbe Weiß, entspricht.

3. Verfahren nach einem der Ansprüche 1 oder 2,
**dadurch gekennzeichnet,**
**dass** die Stromstärke des Betriebsstroms der Lampe derart variiert wird, dass der von der Lampe während des Betriebs des Projektionssystems abgegebene Lichtstrom nur kurzzeitig bis gar nicht verschwindet.

4. Projektionssystem mit wenigstens einer Lampe, vorzugsweise einer
Hochleistungs-Entladungslampe,
mit Mitteln zum Erzeugen einer sequentiellen Abfolge von Farben unter Zuhilfenahme der Lampe
und mit Mitteln zur lichtbogenstabilisierenden Steuerung der Stromstärke des der Lampe zugeführten elektrischen Betriebsstromes über die Zeit, wobei vorgesehen ist, dass der Lampenstrom einen den Lichtbogen stabilisierenden Puls aufweist,
**dadurch gekennzeichnet,**
**dass** die Farbabfolge Weiß aufweist
und **dass** die Steuerungsmittel über Synchronisationsmittel mit den Mitteln zum Erzeugen der sequentiellen Abfolge von Farben wirkverbunden sind, um die Stromstärke des Betriebsstroms der Lampe derart zu steuern und mit der sequentiellen Abfolge von Farben zu synchronisieren, dass der den Lichtbogen stabilisierende Puls im Betriebsstrom dann auftritt, wenn Weiß und nur Weiß erzeugt wird.

5. Projektionssystems nach Anspruch 4,
**dadurch gekennzeichnet,**
**dass** die Synchronisationsmittel Mittel zur Phasenverschiebung bzw. -einstellung zwischen den Mitteln zum Erzeugen einer sequentiellen Abfolge von Farben und den Steuerungsmitteln umfassen.

6. Proj ektionssystem nach Anspruch 4 oder 5,
**dadurch gekennzeichnet,**
**dass** der Anteil der Zeitdauer, über welche beim Betrieb des Projektionssystems das Weiß erzeugt wird, zwischen etwa 3 bis 15%, vorzugsweise zwischen etwa 6 bis 12%, der Gesamtdauer einer Farberzeugungssequenz beträgt.

7. Projektionssystem nach einem der Ansprüche 4 bis 6,
**dadurch gekennzeichnet,**
**dass** die Mittel zum Erzeugen einer sequentiellen Abfolge von Farben eine Farbscheibe umfassen.

8. Projektionssystem nach Anspruch 7, wobei die Farbscheibe wenigstens ein weißes Segment aufweist,
**dadurch gekennzeichnet,**
**dass** die beim Betrieb des Projektionssystems in den Strahlengang der für die Projektion verwendeten Lichtstrahlen tretende weiße Segmentfläche zwischen etwa 3 bis 15%, vorzugsweise zwischen etwa 6 bis 12% der Gesamtfläche aller in den Strahlengang der für die Projektion verwendeten Lichtstrahlen tretenden Segmentflächen der Farbscheibe beträgt.

## Claims

1. A method for operating a projection system with at least one lamp, preferably a high intensity discharge lamp, in which a sequential series of colors is generated with the aid of the lamp and in which the current strength of the electrical operating current supplied to the lamp is varied in time, so that the lamp current includes a pulse stabilizing the light arc, **characterized in that** the color sequence includes white and the current strength of the operating current of the lamp is controlled such that the pulse stabilizing the light arc of the lamp occurs in the operating current only when white and only white is generated.

2. A method as claimed in claim 1, **characterized in that** a period of time of the pulse corresponds in essence to the duration of the generation of the color white.

3. A method as claimed in any one of the claims 1 or 2, **characterized in that** the current strength of the operating current of the lamp is varied such that the luminous flux delivered by the lamp during the operation of the projection system disappears only briefly or not at all.

4. A projection system comprising at least one lamp, preferably a high-intensity discharge lamp, with means for generating a sequential series of colors with the aid of the lamp and with means for controlling the current strength of the electrical operating current supplied to the lamp in time, preferably for stabilizing the light arc, there being provided that the lamp current includes a pulse stabilizing the light arc, **characterized in that** said control means are operationally linked via synchronization means to the means for generating a sequential series of colors, for controlling the current strength of the operating current of the lamp and synchronizing same with the sequential series of colors such that the pulse stabilizing the light arc occurs in the operating current only when white and only white is generated.

5. A projection system as claimed in claim 4, **characterized in that** the synchronization means comprise means for achieving a phase shift or phase adjustment between the means for generating a sequential series of colors and the control means.

6. A projection system as claimed in claim 4 or 5, **characterized in that** the proportion of the time duration in which the color white is generated during operation of the projection system lies between approximately 3 and 15%, preferably between approximately 6 and 12%, of the total duration of a color generating sequence.

7. A projection system as claimed in any one of the claims 1 to 6, **characterized in that** the means for generating a sequential series of colors comprise a color disc.

8. A projection system as claimed in claim 7, in which the color disc comprises at least one white segment, **characterized in that** the white segment surface area entering the radiation path of the light rays used for the projection during the operation of the projection system accounts for between approximately 3 and 15%, preferably between approximately 6 and 12%, of the total surface area of all color disc segment surface areas entering the radiation path of the light rays used for the projection.

## Revendications

1. Procédé de fonctionnement d'un système de projection avec au moins une lampe, de préférence une lampe à décharge à haute puissance, une suite séquentielle de couleurs étant produite à l'aide de la lampe et l'intensité électrique du courant électrique de service amené à la lampe variant dans le temps de telle sorte que le courant de la lampe présente une impulsion stabilisant l'arc lumineux de la lampe,
**caractérisé en ce que** la suite de couleurs présente du blanc
et l'intensité de couleur du courant de service de la lampe est commandée et synchronisée avec la suite séquentielle de couleurs de telle sorte que l'impulsion stabilisant l'arc lumineux de la lampe se trouve dans le courant de service lorsque le blanc et seul le blanc est produit.

2. Procédé selon la revendication 1,
**caractérisé en ce**
**qu'**une durée de l'impulsion correspond essentiellement à la durée de la production de la couleur blanche.

3. Procédé selon l'une des revendications 1 ou 2,
**caractérisé en ce**
**que** l'intensité électrique du courant de service de la lampe varie de telle sorte que l'intensité lumineuse délivrée par la lampe pendant le fonctionnement du système de projection ne disparaît que provisoirement, voire pas du tout.

4. Système de projection avec au moins une lampe, de préférence une lampe à décharge à haute puissance,
avec des moyens de production d'une suite séquentielle de couleurs en utilisant la lampe
et avec des moyens de commande stabilisant l'arc lumineux de l'intensité électrique du courant électrique de service amené à la lampe au fil du temps, auquel cas il est prévu que le courant de la lampe présente une impulsion stabilisant l'arc lumineux,
**caractérisé en ce**
**que** la suite de couleurs présente du blanc
et **que** les moyens de commande sont reliés en liaison active par l'intermédiaire de moyens de synchronisation avec les moyens de production de la suite séquentielle de couleurs pour commander l'intensité électrique du courant de service de la lampe et la synchroniser avec la suite séquentielle de couleurs de telle sorte que l'impulsion stabilisant l'arc lumineux se produise dans le courant de service lorsque le blanc et seul le blanc est produit.

5. Système de projection selon la revendication 4,
**caractérisé en ce**
**que** les moyens de synchronisation comprennent des moyens de décalage ou de réglage de phase entre les moyens pour la production d'une suite séquentielle de couleurs et les moyens de commande.

6. Système de projection selon l'une des revendications 4 ou 5,
**caractérisé en ce**
**que** la proportion de la durée durant laquelle le blanc est produit lors du fonctionnement du système de projection s'élève à 3 à 15 % environ, de préférence à 6 à 12 % environ de la durée totale d'une séquence de production de couleur.

7. Système de projection selon l'une des revendications 4 à 6,
**caractérisé en ce**
**que** les moyens de production d'une suite séquentielle de couleurs comprennent un disque de couleur.

8. Système de projection selon la revendication 7, le disque de couleur présentant au moins un segment blanc
**caractérisé en ce**
**que** la surface de segment blanc rencontrée lors du fonctionnement du système de projection dans le trajet des rayons des rayons lumineux utilisés pour la projection s'élève à 3 à 15 % environ, de préférence 6 à 12 % environ de la surface totale de tous les surfaces de segment du disque de couleur se produisant dans le faisceau de rayons des rayons lumineux utilisés pour la projection.
